# EUROPÄISCHE PATENTSCHRIFT

(11) **EP 0 862 015 B1**
(45) Veröffentlichungstag und Bekanntmachung des Hinweises auf die Patenterteilung: **08.10.2003**
(21) Anmeldenummer: 98103263.4
(22) Anmeldetag: 25.02.1998
(51) Int. Cl.: F21V 14/08, F21V 17/00

(54) **Scheinwerfer für Fahrzeuge**
Vehicle headlamp
Projecteur pour véhicules

(30) Priorität: 28.02.1997 DE 19708109
(43) Veröffentlichungstag der Anmeldung: 02.09.1998
(73) Patentinhaber: Hella KG Hueck & Co., 59552 Lippstadt (DE)
(72) Erfinder: Lachmayer, Roland, 59505 Bad Sassendorf (DE); Topp, Ewald, 59609 Anröchte (DE)

(56) Entgegenhaltungen:
- FR-A- 2 114 887
- US-A- 5 161 875

## Beschreibung

Die Erfindung bezieht sich auf einen Scheinwerfer für Fahrzeuge mit einem zwei Brennorte aufweisenden schalenförmigen Reflektor, mit einer in einem Brennort des Reflektors angeordneten Lichtquelle, mit einer zwischen einer Linse und dem Reflektor angeordneten verstellbaren Blende, welche an ein feststehendes plattenförmiges Trägerelement angebracht ist und durch eine fernbetätigbare Einstelleinrichtung zumindest in eine Fern- und Abblendlicht ergebende Stellung verstellbar ist.

Bei einem solchen aus der EP 0 723 108 A1 bekanntgewordenen Scheinwerfer für Fahrzeuge dient als Lichtquelle eine Gasentladungslampe, deren Lichtbogen in einem inneren Brennort eines ellipsoidförmigen Reflektors angeordnet ist. Zwischen dem Reflektor und einer Linse ist ein äußerer Brennort des Reflektors und eine dem äußeren Brennort benachbarte verstellbare Blende angeordnet. Die Blende ist an ein feststehendes, plattenförmiges Trägerelement angebracht, welches in seiner Hauptausdehnung quer zur optischen Achse verläuft und unterhalb der optischen Achse angeordnet ist. Eine oder mehrere Einstelleinrichtungen dienen zum Verstellen der Blende in eine Abblendlicht und in eine Fernlicht ergebende Stellung und zur Umschaltung der Blende für Rechts- und Linksverkehr. Die Einstelleinrichtung ist außerhalb eines aus Reflektor, Blende und Linse bestehenden optischen Systems angeordnet, und der Anbringungsort für das feststehende plattenförmige Trägerelement und für die Einstelleinrichtung geht nicht aus der EP 0 723 108 A1 hervor. Die Blende ist in ihre Fern- und Abblendlichtstellung durch eine vertikale Führung der Trägerplatte verstellbar oder um eine horizontale und quer zur optischen Achse verlaufende Achse schwenkbar. In der vertikalen Führung kann sich die Blende leicht verkanten. Beim Schwenken der Blende um die horizontale Achse können Lichtstrahlen abgeschirmt werden, welche zur Ausleuchtung des Nahbereichs vor dem Fahrzeug dienen, und somit kann zeitweise eine unerwünschte Dunkelzone im Nahbereich vor dem Fahrzeug entstehen. Das Umstellen der Blende in die Stellung für Rechts- und Linksverkehr erfolgt durch Schwenken der Blende um eine in Lichtaustrittsrichtung und in der vertikalen Mittelebene des Reflektors verlaufende Achse. Um ein asymmetrisches Abblendlicht zu erhalten, weist die Blende zwei auf unterschiedlichem Niveau verlaufende Blendenkantenabschnitte auf. Die verstellbare Blende ist in ihrer Fernlichtstellung unterhalb der oberen Kante des plattenförmigen Trägerelementes angeordnet. Die obere Kante des Trägerelementes dient als Blendenkante zur Erzeugung einer Hell-/Dunkelgrenze für Fernlicht.

Aus der DE 38 06 658 A1 ist ein Scheinwerfer für Fahrzeuge bekanntgeworden, bei dem als Trägerelement der Blende ein an dem vorderen Rand des Reflektors befestigtes Trägergestell der Linse dient. Die Blende ist um eine horizontale und quer zur optischen Achse verlaufende Achse in ihre Fern- und Abblendlichtstellung schwenkbar. Die Einstelleinrichtung der Blende ist an der Rückseite des Reflektors angeordnet und von einem elektrischen Hubmagneten gebildet. Der Hubmagnet ist über eine lange Hubstange, welche unterhalb des Reflektors verläuft, mit einem nach unten gerichteten Schwenkarm der Blende gelenkig verbunden. Die Montage der Einstelleinrichtung ist zeitaufwendig und umständlich, da sie an der Rückseite des Reflektors anzubringen ist und das freie Ende ihrer Hubstange mit dem Schwenkarm der Blende zu verbinden ist und somit die Einstelleinrichtung und die Blende keine vormontierbare Einheit sind. Außerdem baut das aus Reflektor, Blende und Linse gebildete System in seinen Abmessungen größer, da die Einstelleinrichtung und ihre lange Hubstange außerhalb des Systems angeordnet ist.

Ein aus der DE 41 02 586 A1 bekanntgewordener Scheinwerfer für Fahrzeuge weist eine verstellbare Blende auf, welche die Hell-/Dunkelgrenze eines asymmetrischen Abblendlichts erzeugt und kontinuierlich verstellbar ist, damit die Hell-/Dunkelgrenze des Abblendlichtbündels sich der Neigung des Fahrzeuges, insbesondere eines Motorrades, anpassen kann. Ein Umschalten der Blende für Fern- und Abblendlicht ist nicht möglich. Die verstellbare Blende ist so großflächig gestaltet, daß sie unterhalb ihrer Blendenkante alle störenden Lichtstrahlen der Lichtquelle abschirmt.

Ein armförmiges Trägerelement für die verstellbare Blende und die elektrische Einstelleinrichtung ist an dem Reflektor angebracht. An dem nach oben weisenden Endabschnitt des Trägerelementes ist die Blende um eine Achse schwenkbar gelagert, welche mit der optischen Achse des Scheinwerfers zusammenfällt. Der untere Endabschnitt des Trägerelementes ragt aus dem von Reflektor, Blende und Linse gebildeten System heraus und trägt an diesem Endabschnitt die elektrische Einstelleinrichtung.

Aus der US 5 161 875 und der FR 2 114 887 sind Scheinwerfer bekannt, bei denen eine fernbetätigbare Einstelleinrichtung zumindest teilweise innerhalb eines von einem Reflektor, mindestens einer verstellbaren Blende und einer Linse gebildeten optischen Systems angeordnet und unterhalb der verstellbaren Blende an einem feststehenden Trägerelement angebracht ist. Die verstellbare Blende ist nicht in eine Fern- und Abblendlicht ergebende Stellung verstellbar.

Ein aus der EP 0 429 922 B1 bekannter Scheinwerfer weist eine von Hand verstellbare Blende auf, durch die ausschließlich abgeblendete Lichtfiguren erzeugbar sind. Die verstellbare Blende ist um eine in Lichtaustrittsrichtung verlaufende Achse schwenkbar und in einem Abstand zur vertikalen Mittelebene des Scheinwerfers unterhalb des auf tieferem Niveau verlaufenden Blendenkantenabschnitts der Blende angeordnet.

Aufgabe der Erfindung ist es, den im Oberbegriff des Anspruchs 1 beschriebenen Scheinwerfer für Fahrzeuge derart zu gestalten, dass durch die Anordnung eine kompakte (kleine Abmessungen aufweisende) Scheinwerfer - Baueinheit mit möglichst wenigen Einzelbauteilen (unaufwendige Montage) angestrebt wird und trotzdem die fernbetätigbare Einstelleinrichtung in Richtung der optischen Achse eine große Bauhöhe aufweisen kann. Diese Aufgabe wird nach der Erfindung durch die Merkmale des kennzeichnenden Teils des Anspruchs 1 gelöst. Die Vertiefung kann so tief ausgeführt sein, dass die feststellbare Blende, das Hubelement und die die Achse bildende Lagerung annähernd in einer Fläche liegen, welche angrenzend zu einer Hauptfläche des Trägerelements verläuft. Durch die Anordnung der Einstelleinrichtung in der Vertiefung des Trägerelements und durch die nahe Anordnung des Hubelements zur Hauptfläche des Trägerelements müssen keine das Trägerelement zusätzlich belastende Drehmomente entstehen.

Das Trägerelement, die Blende und die Einstelleinrichtung sind zusammen eine Montageeinheit, und der Bereich des Trägerelementes unterhalb der verstellbaren Blende kann so großflächig gestaltet sein, daß er alle störende Lichtstrahlen der Lichtquelle abschirmt.

Bei einer wärmeempfindlichen Einstelleinrichtung ist es vorteilhaft, wenn diese auf der dem Reflektor abgewandten Seite des Trägerelementes an dem Bereich unterhalb der Blende angebracht ist. Hierbei ist die Einstelleinrichtung durch den unterhalb der Blende angeordneten Bereich des Trägerelementes von Lichtstrahlen der Lichtquelle abgeschirmt, welche die Einstelleinrichtung zusätzlich aufheizen würden.

Bei einer wärmeunempfindlichen Einstelleinrichtung ist es vorteilhaft, wenn diese auf der dem Reflektor zugewandten Seite des Trägerelementes an dem Bereich unterhalb der Blende angebracht ist. Hierbei ist die Einstelleinrichtung durch den Bereich des Trägerelementes unterhalb der Blende gegen Einblicke in das Scheinwerferinnere abgeschirmt und muß kein besonderes äußeres Erscheinungsbild aufweisen.

Das Trägerelement ist sehr stabil ausgeführt, wenn es sich mindestens bis zum Rand des von Reflektorblende und Linse gebildeten optischen Systems hin erstreckt und den gesamten vorderen Öffnungsabschnitt des Reflektors, welcher sich unterhalb der verstellbaren Blende befindet, abdeckt. Dadurch können unterhalb der verstellbaren Blende keine störenden Lichtstrahlen mehr an der Blende vorbeigehen. Der Reflektor und das Trägerelement bilden zusammen eine verwindungssteife Einheit, wenn das Trägerelement unterhalb der verstellbaren Blende und zu beiden Seiten der verstellbaren Blende an dem vorderen Rand des Reflektors befestigt ist.

Bei einer wärmeempfindlichen Einstelleinrichtung ist es vorteilhaft, wenn diese über Distanzelemente an dem Trägerelement angebracht ist, da sich das Trägerelement an dem die Blende tragenden oberen Randbereich stark aufheizen kann.

Der unterhalb der verstellbaren Blende angeordnete Bereich des Trägerelementes kann sehr großflächig gestaltet sein, wenn der Bereich nach oben hin von einer als einarmiger Hebel ausgeführten verstellbaren Blende begrenzt ist, welche in ihrer Längsausdehnung benachbart zum oberen Randbereich des Trägerelementes verläuft und um eine in Lichtaustrittsrichtung verlaufende Achse schwenkbar ist. Dadurch kann eine Einstelleinrichtung, zumindest mit ihrem größten Teil innerhalb des Bereiches des Trägerelementes liegen.

Bei einem Scheinwerfer für Fahrzeuge, dessen verstellbare Blende mit ihrer Blendenkante die Hell-/Dunkelgrenze eines asymmetrischen Abblendlichts erzeugt und welche durch die fernbetätigbare Einstelleinrichtung in eine das Abblendlicht und eine das Fernlicht ergebende Stellung verstellbar ist und zwei auf unterschiedlichem Niveau verlaufende Blendenkantenabschnitte aufweist, von denen in der Stellung der Blende für Abblendlicht der auf höherem Niveau verlaufende Blendenkantenabschnitt den Abschnitt der Hell-/Dunkelgrenze für die Gegenfahrbahnseite und der auf tieferem Niveau verlaufende Blendenkantenabschnitt den Abschnitt der Hell-/Dunkelgrenze für die eigene Fahrbahnseite erzeugt, ist es weiterhin vorteilhaft, wenn die Blende, welche um eine Lichtaustrittsrichtung verlaufende Achse schwenkbar ist, in einem Abstand zur vertikalen Mittelebene unterhalb des auf tieferem Niveau verlaufenden Blendenkantenabschnittes der Blende angeordnet ist. Dadurch muß die Blende nur um einen sehr kleinen Schwenkwinkel verstellt werden, um Fernlicht und Abblendlicht zu erhalten. Bei einer unterhalb des auf höherem Niveau verlaufenden Blendenkantenabschnittes angeordneten Achse der Blende wäre der Schwenkwinkel der Blende wesentlich größer und somit die Verstellzeit der Blende, größer und der Bereich des Trägerelementes unterhalb der verstellbaren Blende für die Einstelleinrichtung kleiner. In diesem Zusammenhang ist es weiterhin vorteilhaft, wenn die Achse, um welche die Blende schwenkbar ist, durch den oberen Randbereich des plattenförmigen Trägerelementes hindurchgeht.

Für das Fernlicht besteht eine symmetrische Lichtverteilung, wenn das Trägerelement eine Blendenkante für Fernlicht aufweist, welche in der Stellung der Blende für Fernlicht oberhalb der verstellbaren Blende verläuft und mit zwei Abschnitten zur vertikalen Mittelebene des Reflektors abfallend verläuft. Wegen der abfallend verlaufenden Abschnitte des oberen Randbereichs des Trägerelementes kann die Achse, um welche die Blende verschwenkbar ist, höher angeordnet sein, als wenn die Blendenkante des Trägerelementes horizontal verläuft.

Bei einer besonders vorteilhaften Weiterbildung der Erfindung ist die Vertiefung des Trägerelements zur Linse hin geöffnet und trägt an ihrer Außenseite ein unterhalb des Reflektors angeordnetes Elektronikgerät. Das Elektronikgerät ist an der durch die Vertiefung eine hohe Steifigkeit aufweisenden Trägerplatte befestigt und ist durch seine Lage außerhalb des Reflektors nicht der von der Lichtquelle erzeugten Wärme ausgesetzt. Das Elektronikgerät steuert die elektrische Versorgung der Einstelleinrichtung.

In der Zeichnung sind mehrere Ausführungsbeispiele nach der Erfindung dargestellt, und zwar zeigen
- Figur 1: in einem mittleren vertikalen Schnitt einen Scheinwerfer für Fahrzeuge mit einer fernbetätigbaren Einstelleinrichtung für eine verstellbare Blende,
- Figur 2, 4 und 6: eine Ansicht aus Richtung x in Figur 1 auf unterschiedlich ausgeführte Blenden und Einstelleinrichtungen,
- Figur 3 und 5: eine Ansicht aus Richtung y in Figur 2 bzw. 4,
- Figur 7: einen Schnitt nach der Linie A-A in Figur 6 durch die Einstelleinrichtung und
- Figur 8: in einem mittleren vertikalen Schnitt einen weiteren Scheinwerfer für Fahrzeuge, dessen fernbetätigbare Einstelleinrichtung für eine Blende in einer Vertiefung eines Trägerelements angeordnet ist.

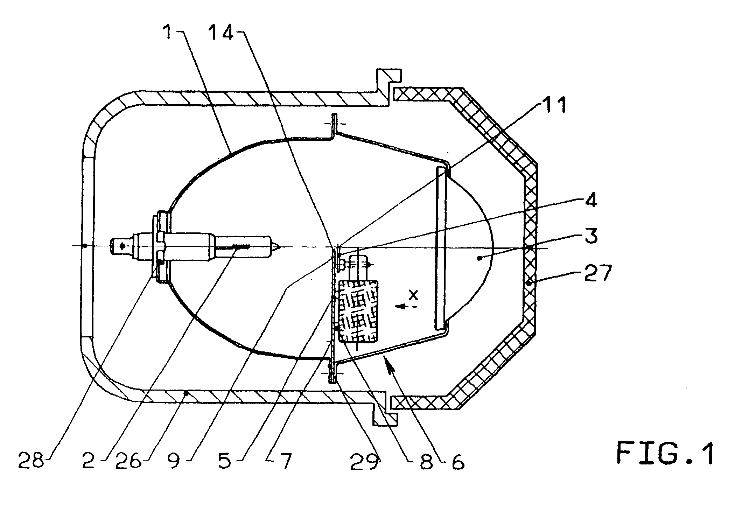

Der in Figur 1 gezeigte Scheinwerfer für Fahrzeuge weist ein topfförmiges Scheinwerfergehäuse (26) auf, auf dessen vorderen Rand eine schalenförmige, lichtdurchlässige Abschlußscheibe (27) aufgesetzt ist. In dem von Scheinwerfergehäuse (26) und Abschlußscheibe (27) gebildete Inneren des Scheinwerfers ist ein optisches System verstellbar angeordnet, welches aus einem ellipsoidförmigen Reflektor (1), einer Lichtquelle (2), einer verstellbaren Blende (4) und einer Linse (3) besteht. In einem inneren Brennort des ellipsoidförmigen Reflektors (1) ist die Lichtquelle (2) angeordnet. Als Lichtquelle (2) kann eine Wendel einer Glühlampe oder ein Lichtbogen einer Gasentladungslampe dienen. Die Lampe ist in einer Reflektoröffnung (28) im Scheitelbereich des Reflektors (1) eingesetzt. Die verstellbare Blende (4) ist mit ihrer Blendenkante (11) nahe einem äußeren Brennort des ellipsoidförmigen Reflektors (1) angeordnet. Eine Reflexionsfläche des ellipsoidförmigen Reflektors (1) kann eine frei gestaltete Fläche sein, das heißt, zumindest Bereiche der Reflexionsfläche sind nicht durch eine mathematische Funktion bestimmt.

Die verstellbare Blende (4) und eine fernbetätigbare Einstelleinrichtung (6) sind an einem plattenförmigen Trägerelement (5) angebracht. Das plattenförmige Trägerelement (5) ist halbkreisförmig ausgeführt und unterhalb der horizontalen Mittelebene des Reflektors (1) an dem vorderen Rand (29) des Reflektors (1) angebracht. Deshalb verläuft das plattenförmige Trägerelement (5) in einer Fläche, durch welche die optische Achse des Reflektors (1) lotrecht hindurchgeht. Das plattenförmige Trägerelement weist auf beiden Seiten der vertikalen Mittelebene des Reflektors (1) Befestigungsmittel (30) auf, durch welche das Trägerelement (5) an dem vorderen Rand (29) des Reflektors (1) befestigbar ist. Die Blende (4) ist ein einarmiger Hebel, welcher an dem Trägerelement (5) um eine Achse (10) in eine Abblendlicht und Fernlicht ergebende Stellung schwenkbar ist. Die Blende (4) verläuft in ihrer Längsausdehnung angrenzend zum oberen Randbereich (9) des Trägerelementes (5). In der Abblendlichtstellung der Blende (4) verläuft ihre Blendenkante (11) oberhalb des Trägerelementes (5) und erzeugt mit den auf unterschiedlichem Niveau verlaufenden Blendenkantenabschnitten (12 und 13) ein asymmetrisches Abblendlicht. Beim Schwenken der Blende (4) von der Abblendlichtstellung in die Fernlichtstellung verläuft zumindest der größte Teil der Blendenkante (11) der Blende (4) unterhalb einer Blendenkante (14) des Trägerelementes (5). Die Blendenkante (14) des Trägerelementes (5) weist zwei Abschnitte (15) auf, welche zur vertikalen Mittelebene des Reflektors (1) hin abfallend verlaufen und somit ein symmetrisches Fernlicht ergeben. Die Achse (10), um welche die Blende (4) schwenkbar ist, ist nahe einem äußeren Randabschnitt des Trägerelementes (5) und des Reflektors (1) und unterhalb des auf tieferem Niveau verlaufenden Blendenkantenabschnittes (13) der Blende (4) angeordnet. Dadurch ist ein kleinerer Schwenkwinkel (a) der Blende (4) möglich, als wenn die Schwenkachse unterhalb des auf höherem Niveau verlaufenden Blendenkantenabschnitts (12) der Blende (4) verläuft. Die Blende (4) und die Einstelleinrichtung (6) sind auf der dem Reflektor (1) abgewandten Seite des Trägerelementes (5) angebracht, wobei die Einstelleinrichtung (6) unterhalb der langgestreckten Blende (4) an einem Bereich (7) des Trägerelementes (5) befestigt ist, welcher zur Abschirmung von Lichtstrahlen der Lichtquelle (2) dient. Die Einstelleinrichtung (6) kann, in Lichtaustrittsrichtung gesehen, mit ihrer gesamten Ausdehnung innerhalb des Bereichs (7) angeordnet sein oder, wenn im Scheinwerfergehäuse ausreichend Raum vorhanden ist, aus dem Bereich (7) herausragen. Die Einstelleinrichtung (6) weist einen ersten Elektromagneten (16) und einen zweiten bzw. dritten Elektromagneten (18 bzw. 23) auf.

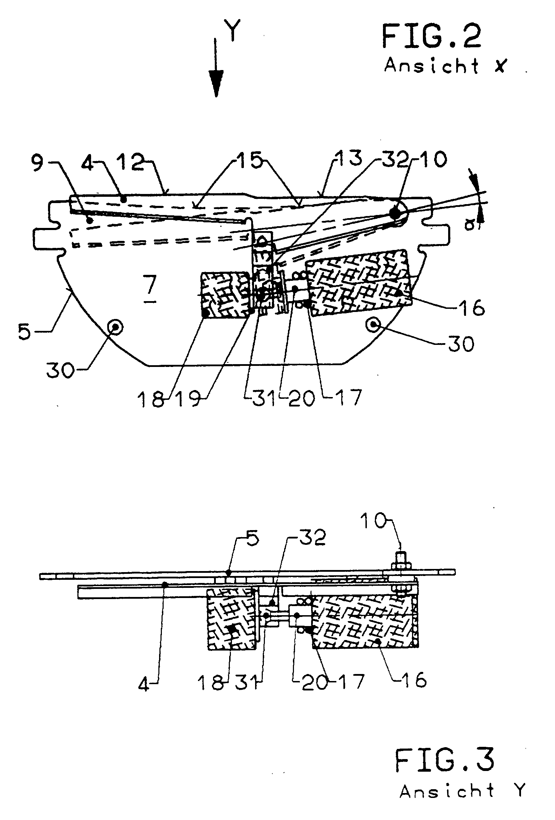

In Figur 2 und 3 dient als erster Elektromagnet (16) ein Hubmagnet, dessen Hubelement (20) bei aktiviertem ersten Elektromagneten (16) entgegen der Kraft einer Halteeinrichtung (17) die Blende (4) von der Abblendlicht- in die Fernlichtstellung schwenkt. Als Halteeinrichtung (17) dient eine schraubenförmige Druckfeder, durch welche der aus dem Gehäuse des ersten Elektromagneten (16) herausragende Endabschnitt des Hubelementes (20) hindurchführt und welche zwischen dem freien Endabschnitt des Hubelementes (20) und dem Gehäuse des ersten Elektromagneten (16) unter Vorspannung eingesetzt ist. Die Hubrichtung des ersten Elektromagneten (16) verläuft annähernd in Richtung der Längsausdehnung der Blende (4) und der erste Elektromagnet (16) ist direkt unterhalb des auf tieferem Niveau verlaufenden Blendenkantenabschnittes (13) angeordnet. Das Hubelement (20) weist am freien Ende einen Kugelkopf (31) auf, welcher in ein an die Blende (4) angebrachtes Führungsteil (32) eingreift. Das Führungsteil (32) ist ein von der Blende (4) nach unten weisender Ansatz. Der Kugelkopf (31) des Hubelementes (20) gleitet beim Schwenken der Blende (4) in dem annähernd vertikal verlaufenden Führungsteil (32). Bei einem Umstellen der Blende (4) von der Fernlicht- in die Abblendlichtstellung ist der erste Elektromagnet (16) stromfrei zu schalten. Danach drückt die von einer Druckfeder gebildete Halteeinrichtung (17) das Hubelement (20) aus dem Gehäuse des ersten Elektromagneten (16) heraus, und der Kugelkopf (31) des Hubelementes (20) drückt die Blende (4) in die Abblendlichtstellung. In der Abblendlichtstellung liegt der Führungsteil (32) an dem zweiten Elektromagneten (18) an. Bei eingeschaltetem Abblendlicht des Scheinwerfers ist der zweite Elektromagnet (18) aktiviert, und seine Kraft hält zusätzlich zu der Kraft der Halteeinrichtung (17) die Blende (4) in der Abblendlichtstellung. Ein Schwenken der Blende (4) von der Fernlicht- in die Abblendlichtstellung kann auch durch die gemeinsame Kraft von Halteeinrichtung (17) und zweitem Elektromagnet (18) erfolgen. Der zweite Elektromagnet (18) oder ein Abschnitt des Trägerelementes (nicht dargestellt) kann als Anschlag der Blende (4) in der Abblendlichtstellung dienen. Der erste und zweite Elektromagnet (16 und 18) ist über Distanzelemente (8) an dem Trägerelement (5) befestigt.

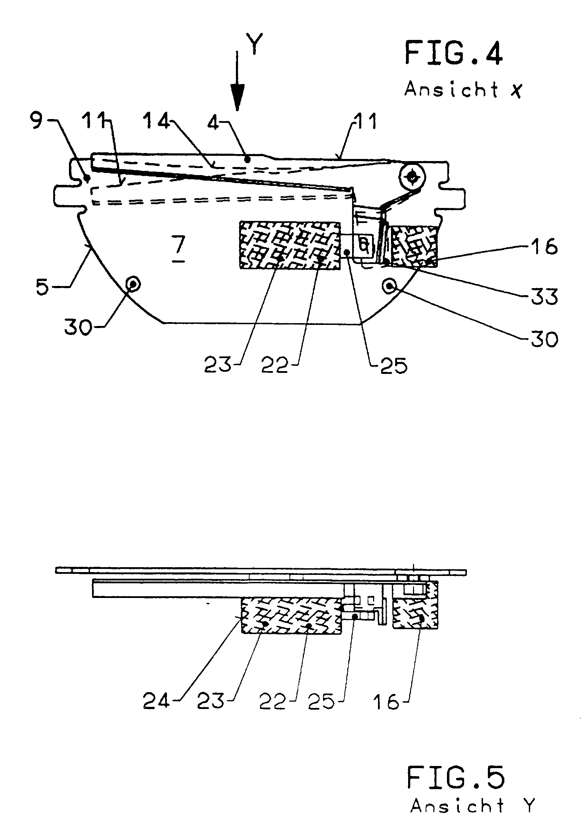

In Figur 4 und 5 ist die Halteeinrichtung (22), welche die Blende (4) selbsttätig von der Fernlicht- in die Abblendlichtstellung schwenkt und die Blende (4) selbsttätig in der Abblendlichtstellung haltert, von einem Dauermagneten (22) gebildet. Der Dauermagnet (22) ist in das Gehäuse (24) eines dritten Elektromagneten (23) integriert, welcher ein Hubmagnet ist und mit dem Hubelement (25) gelenkig mit der Blende (4) verbunden ist. Die Blende (4) ist in der Abblendlichtstellung durch die Kraft des Dauermagneten (22) gehalten, welcher das Hubelement (25) gegen einen Anschlag im Gehäuse des dritten Elektromagneten (23) hält. Die Längsachse des Hubelements (25) verläuft annähernd in Richtung der Längsausdehnung der Blende (4). Beim Umschalten von Abblendlicht in Fernlicht ist durch eine Aktivierung des dritten Elektromagneten (23) die magnetische Kraft des Dauermagneten (22) zumindest teilweise kompensiert, und der erste Elektromagnet (16) schwenkt durch seine Anzugskraft die Blende (4) bis gegen einen von dem ersten Elektromagneten (16) gebildeten Anschlag (33). In der Fernlichtstellung der Blende (4) ist der dritte Elektromagnet (23) stromfrei geschaltet, da die Anzugskraft des Dauermagneten (22) in der Fernlichtstellung der Blende (4) wesentlich kleiner ist als die Haltekraft der Blende (4) in der Abblendlichtstellung.

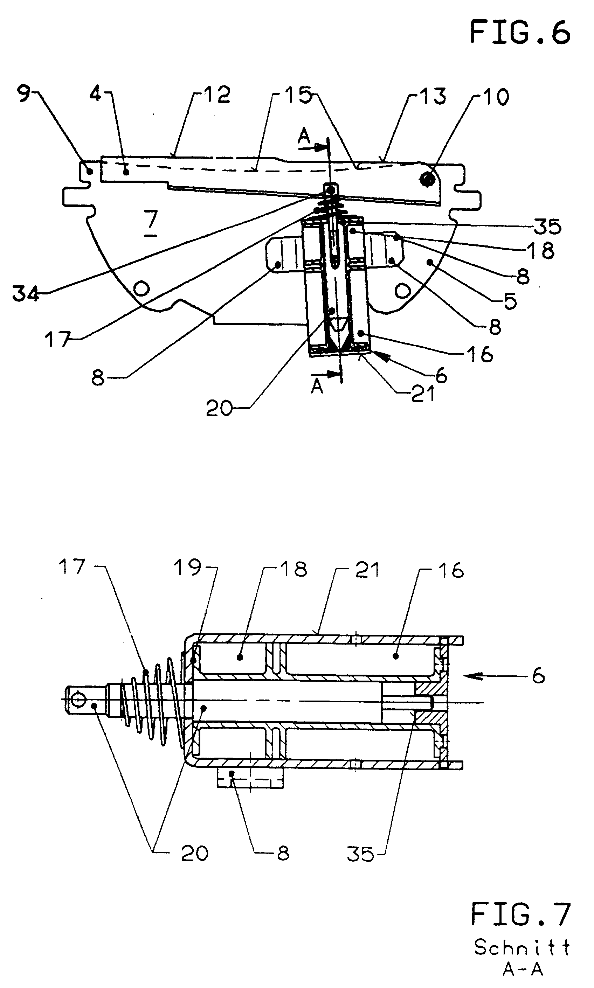

Die Figuren 6 und 7 zeigen eine Einstelleinrichtung (6), bei welcher der erste und zweite Elektromagnet (16 und 18) eine gemeinsame Baueinheit (21) sind. Der erste und zweite Elektromagnet (16 und 18) sind hintereinander angeordnet und weisen ein gemeinsames Hubelement (20) auf, dessen aus der Baueinheit (21) herausragender Endabschnitt durch eine Halteeinrichtung (17) hindurchgeht, welche von einer kegelförmigen Druckfeder gebildet ist. Die Längsachse des Hubelementes (20) tangiert einen Kreisbogen, dessen Mittelpunkt die Achse (10) der Blende (4) ist. Ein zwischen dem freien Ende des Hubelementes (20) und der Blende (4) bestehendes Gelenk (34) ist nahe dem Kreisbogen angeordnet. Das Hubelement (20) ist in der Abblendlichtstellung der Blende (4) gegen einen Anschlag (19) und in der Fernlichtstellung der Blende (4) gegen einen Anschlag (35) gehalten. Die Anschläge (35 und 36) sind sich zugewandt und von der Innenseite der Baueinheit (21) gebildet. Die Baueinheit (21) ist über laschenartige Distanzelemente (8) an dem Trägerelement (5) befestigt. Die Blende (4) ist in der Abblendlichtstellung mit einer Vollinie und in der Fernlichtstellung mit einer strichpunktierten Linie dargestellt. Die aus dem ersten und zweiten Elektromagneten (16 und 18) bestehende Baueinheit (21) kann auch so an dem Trägerelement (5) angebracht sein, daß das Hubelement (20) mit seiner Längsachse annähernd in Richtung der Längsausdehnung Blende (4) bzw. Blendenkante (11) der Blende (4) verläuft. Hierbei sollte das Hubelement (20) mit einem Kugelkopf in ein vertikales Führungsteil der Blende (4) eingreifen.

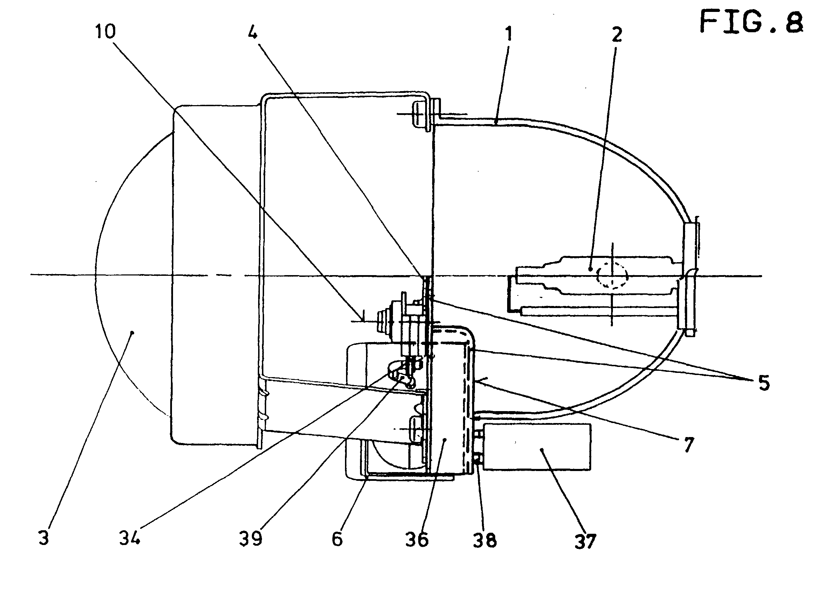

Bei dem Scheinwerfer nach Figur 8 ist die fernbetätigbare Einstelleinrichtung (6) in einer zur Linse (3) hin geöffneten Vertiefung (36) eines plattenförmigen Trägerelements (5) angeordnet. Die Vertiefung (36) ist im Tiefziehverfahren hergestellt. Die Einstelleinrichtung (6) ist durch eine nicht dargestellte Nietverbindung an dem Boden der Vertiefung (36) befestigt. Ein Hubelement (39) der Einstelleinrichtung (6) liegt zusammen mit der verstellbaren Blende (4) und einer die Achse (10) bildenden Lagerung annähernd in einer Fläche, welche angrenzend zur Hauptfläche des plattenförmigen Trägerelements (5) verläuft. Das plattenförmige Trägerelement (5) greift mit seiner Vertiefung (36) in eine Aussparung des äußeren Randbereichs des Reflektors (1) ein. An der der Linse abgewandten Seite der Vertiefung ist ein unterhalb des Reflektors angeordnetes Elektronikgerät (37) befestigt. Das Elektronikgerät (37) ist über Anlötstifte (38) mit der Einstelleinrichtung (6) verbunden. Das Elektronikgerät (37) dient zur Signalaufbereitung und Beschaltung der Einstelleinrichtung.

### Bezugszeichenliste

### Scheinwerfer für Fahrzeuge

- 1: Reflektor
- 2: Lichtquelle
- 3: Linse
- 4: Blende
- 5: Trägerelement
- 6: Einstelleinrichtung
- 7: Bereich
- 8: Distanzelemente
- 9: Randbereich
- 10: Achse
- 11: Blendenkante
- 12: Blendenkantenabschnitt
- 13: Blendenkantenabschnitt
- 14: Blendenkante
- 15: Abschnitte
- 16: erster Elektromagnet
- 17: Halteeinrichtung
- 18: zweiter Elektromagnet
- 19: Anschlag
- 20: Hubelement
- 21: Baueinheit
- 22: Halteeinrichtung
- 23: dritter Elektromagnet
- 24: Bauteil
- 25: Hubelement
- 26: Scheinwerfergehäuse
- 27: Abschlußscheibe
- 28: Reflektoröffnung
- 29: Rand
- 30: Befestigungsmittel
- 31: Kugelkopf
- 32: Führungsteil
- 33: Anschlag
- 34: Gelenk
- 35: Anschlag
- 36: Vertiefung
- 37: Elektronikgerät
- 38: Anlötstifte
- 39: Hubelement

## Patentansprüche

1. Scheinwerfer für Fahrzeuge mit einem zwei Brennorte aufweisenden schalenförmigen Reflektor (1), mit einer in einem Brennort des Reflektors (1) angeordneten Lichtquelle (2), mit einer zwischen einer Linse (3) und dem Reflektor (1) angeordneten verstellbaren Blende (4), welche an ein feststehendes plattenförmiges Trägerelement (5) angebracht ist und durch eine fernbetätigbare Einstelleinrichtung (6) zumindest in eine Fern- und Abblendlicht ergebende Stellung verstellbar ist, **dadurch gekennzeichnet, daß** die fernbetätigbare Einstelleinrichtung (6) zumindest teilweise innerhalb des von Reflektor (1), Blende (4) und Linse (3) gebildeten optischen Systems angeordnet ist und unterhalb der Blende (4) an einem als Abschirmelement für Lichtstrahlen der Lichtquelle (2) dienenden Bereich (7) des feststehenden Trägerelementes (5) angebracht ist und in dem Bereich (7) des feststehenden Trägerelements (5) eine zur Aufnahme der fernbetätigbaren Einstelleinrichtung (6) dienende Vertiefung (36) eingebracht ist.

2. Scheinwerfer nach Anspruch 1, **dadurch gekennzeichnet, daß** die fernbetätigbare Einstelleinrichtung (6) auf der dem Reflektor (1) abgewandten Seite des Trägerelementes (5) an seinem unterhalb der Blende (4) sich erstreckenden Bereich (7) angebracht ist.

3. Scheinwerfer nach Anspruch 1, **dadurch gekennzeichnet, daß** die fernbetätigbare Einstelleinrichtung (6) auf der dem Reflektor (1) zugewandten Seite des Trägerelementes (5) an seinem unterhalb der Blende (4) sich erstreckenden Bereich (7) angebracht ist.

4. Scheinwerfer nach einem der Ansprüche 1 bis 3, **dadurch gekennzeichnet, daß** der als Abschirmelement und zur Befestigung der fernbetätigbaren Einstelleinrichtung (6) dienende Bereich (7) des Trägerelementes (5) sich . mindestens bis zum Rand des von Reflektor (1), Blende (4) und Linse (3) gebildeten optischen Systems hin erstreckt und annähernd den gesamten vorderen Öffnungsabschnitt des Reflektors (1), welcher sich unterhalb der verstellbaren Blende (4) befindet, abdeckt.

5. Scheinwerfer nach Anspruch 4, **dadurch gekennzeichnet, daß** das Trägerelement (5) auf beiden Seiten der vertikalen Mittelebene des Reflektors (1) an dem vorderen Rand des Reflektors (1) befestigt ist.

6. Scheinwerfer nach einem der Ansprüche 1 bis 5, **dadurch gekennzeichnet, daß** die fernbetätigbare Einstelleinrichtung (6) über Distanzelemente (8) an dem Bereich (7) des Trägerelementes (5) angebracht ist.

7. Scheinwerfer nach einem der Ansprüche 1 bis 6, **dadurch gekennzeichnet, daß** der als Abschirmelement und zur Befestigung der fernbetätigbaren Einstelleinrichtung (6) dienende Bereich (7) nach oben hin von einer als einarmiger Hebel ausgeführten Blende (4) begrenzt ist, welche in ihrer Längsausdehnung benachbart zum oberen Randbereich (9) des Trägerelementes (5) verläuft und um eine in Lichtaustrittsrichtung verlaufende Achse (10) schwenkbar ist.

8. Scheinwerfer für Fahrzeuge, dessen verstellbare Blende (4) mit ihrer Blendenkante (11) die Hell-/Dunkelgrenze eines asymmetrischen Abblendlichtes erzeugt und durch die fernbetätigbare Einstelleinrichtung (6) in die das Abblendlicht und Fernlicht ergebende Stellung verstellbar ist und zwei auf unterschiedlichem Niveau verlaufende Blendenkantenabschnitte (12 und 13) aufweist, von denen in der Stellung der Blende (4) für Abblendlicht der auf höherem Niveau verlaufende Blendenkantenabschnitt (12) den Abschnitt der Hell-/Dunkelgrenze für die Gegenfahrbahnseite und der auf tieferem Niveau verlaufende Blendenkantenabschnitt (13) den Abschnitt der Hell-/Dunkelgrenze für die eigene Fahrbahnseite erzeugt, nach einem der Ansprüche 1 bis 7, **dadurch gekennzeichnet, daß** die Blende (4), welche um eine in Lichtaustrittsrichtung verlaufende Achse (10) schwenkbar ist, in einem Abstand zur vertikalen Mittelebene unterhalb des auf tieferem Niveau verlaufenden Blendenkantenabschnitts (13) der Blende (4) angeordnet ist.

9. Scheinwerfer nach Anspruch 7 oder 8, **dadurch gekennzeichnet, daß** die Achse (10) durch den oberen Randbereich (9) des plattenförmigen Trägerelementes (5) hindurchgeht.

10. Scheinwerfer nach einem der Ansprüche 1 bis 9, **dadurch gekennzeichnet, daß** das Trägerelement (5) eine Blendenkante (14) für Fernlicht aufweist, welche in der Stellung der Blende (4) für Fernlicht oberhalb der Blende (4) verläuft.

11. Scheinwerfer nach Anspruch 10, **dadurch gekennzeichnet, daß** die Blendenkante (14) mit zwei Abschnitten (15) zur vertikalen Mittelebene des Reflektors (1) hin abfallend verläuft.

12. Scheinwerfer nach einem der Ansprüche 1 bis 11, **dadurch gekennzeichnet, daß** die verstellbare Blende (4), das Hubelement (39) und die die Achse (10) bildende Lagerung annähernd in einer Fläche liegen, welche angrenzend zu einer Hauptfläche des Trägerelements (5) verläuft.

13. Scheinwerfer nach Anspruch 12, **dadurch gekennzeichnet, daß** die Vertiefung (36) des Tägerelements (5) zur Linse (3) hin geöffnet ist und an ihrer Außenseite ein unterhalb des Reflektors (1) angeordnetes Elektronikgerät (37) trägt.

## Claims

1. A headlamp for vehicles, comprising a dished reflector (1) having two foci, a light source (2) arranged at one focus of the reflector (1), an adjustable light stopping member (4) arranged between a lens (3) and the reflector (1), which light stopping member (4) is mounted to a fixed, plate-like support element (5) and is adjustable by means of a remotely operable adjusting device (6) at least to a position producing a main beam and to a position producing a dipped beam, **characterised in that** the remotely operable adjusting device (6) is arranged at least partially within the optical system formed by the reflector (1), the light stopping member (4) and the lens (3) and is mounted below the light stopping member (4) to a portion (7) of the fixed support element (5) which serves as a screening element for light rays from the light source (2), and a recess (36) serving to accommodate the remotely operable adjusting device is formed in the portion (7) of the fixed support element (5).

2. A headlamp according to Claim 1, **characterised in that** the remotely operable adjusting device (6) is mounted on the side of the support element (5) facing away from the reflector (1) on the portion (7) of said support element (5) extending below the light stopping member (4).

3. A headlamp according to Claim 1, **characterised in that** the remotely operable adjusting device (6) is mounted on the side of the support element (5) facing towards the reflector (1) on the portion (7) of said support element (5) extending below the light stopping member (4).

4. A headlamp according to any one of claims 1 to 3, **characterised in that** the portion (7) of the support element (5) serving as the screening element and for mounting the remotely operable adjusting device (6) extends at least to the edge of the optical system formed by the reflector (1), the light stopping member (4) and the lens (3) and covers approximately the entire front aperture section of the reflector (1) which is located below the adjustable light stopping member (4).

5. A headlamp according to Claim 4, **characterised in that** the support element (5) is attached to the front edge of the reflector (1) on both sides of the vertical centre plane of the reflector (1).

6. A headlamp according to any one of claims 1 to 5, **characterised in that** the remotely operable adjusting device (6) is mounted to the portion (7) of the support element (5) by means of spacers (8).

7. A headlamp according to any one of claims 1 to 6, **characterised in that** the portion (7) serving as the screening element and for mounting the remotely operable adjusting device (6) is delimited upwardly by a light stopping member (4) configured as a single-armed lever, which light stopping member (4) is disposed in its longitudinal extension adjacently to the upper edge portion (9) of the support element (5) and is pivotable about an axis (10) disposed in the exit direction of the light.

8. A headlamp for vehicles, the adjustable light stopping member (4) of which produces with its light stopping edge (11) the bright/dark limit of an asymmetrically dipped beam and is adjustable by means of the remotely operable adjusting device (6) to the positions producing a dipped beam and the main beam and has two light stopping edge sections (12 and 13) disposed at different levels, of which light stopping edge sections (12, 13), in the position of the light stopping member (4) for dipped beam, the light stopping edge section (12) disposed at the higher level generates the section of the bright/dark limit for the oncoming lane side and the light stopping section (13) disposed at the lower level generates the section of the bright/dark limit for the vehicle's own lane side, according to any one of claims 1 to 7, **characterised in that** the light stopping member (4) is pivotable about an axis (10) which is disposed in the light exit direction and which is arranged at a distance from the vertical centre plane below the light stopping edge section (13) disposed at the lower level of the light stopping member (4).

9. A headlamp according to Claim 7 or 8, **characterised in that** the axis (10) passes through the upper edge area (9) of the plate-like support element (5).

10. A headlamp according to any one of claims 1 to 9, **characterised in that** the support element (5) has a light stopping edge (14) for main beam which is disposed above the light stopping member (4) in the position of the light stopping member (4) for main beam.

11. A headlamp according to Claim 10, **characterised in that** the light stopping edge (14) has two sections (15) which are inclined downwardly towards the vertical centre plane of the reflector (1).

12. A headlamp according to any one of claims 1 to 11, **characterised in that** the adjustable light stopping member (4), the lifting element (39) and the bearing arrangement forming the axis (10) lie approximately in a plane which is disposed adjacently to the principal plane of the support element (5).

13. A headlamp according to Claim 12, **characterised in that** the recess (36) of the support element (5) is open towards the lens (3) and carries an electronic device (37) arranged on its outer face below the reflector (1).

## Revendications

1. Phare pour véhicules comportant un réflecteur (1) en forme de coque, qui possède deux foyers, une source de lumière (2) disposée en un foyer du réflecteur (1), un diaphragme réglable (4) disposé entre une lentille (3) et le réflecteur (1) et qui est monté sur un élément de support en forme de plaque fixe (5) et peut être réglé au moyen d'un dispositif de réglage télécommandable (6) au moins dans une position fournissant un éclairage de longue portée et un éclairage de croisement, **caractérisé en ce que** le dispositif de réglage télécommandable (6) est disposé au moins en partie à l'intérieur du système optique formé par le réflecteur (1), le diaphragme (4) et la lentille (3), et est monté au-dessous du diaphragme (4) sur une partie (7) de l'élément de support fixe (5), qui sert d'élément d'occultation pour les rayons lumineux de la source de lumière (2), et qu'un renfoncement (36), utilisé pour loger le dispositif de réglage télécommandable (6), est aménagé dans la partie (7) de l'élément de support fixe (5).

2. Phare selon la revendication 1, **caractérisé en ce que** le dispositif de réglage télécommandable (6) est monté, sur le côté de l'élément de support (5) situé à l'opposé du réflecteur (1), dans la partie (7) de cet élément, qui s'étend au-dessous du diaphragme (4).

3. Phare selon la revendication 1, **caractérisé en ce que** le dispositif de réglage télécommandable (6) est monté sur le côté de l'élément de support (5) tourné vers le réflecteur (1), dans la partie (7) de cet élément, qui s'étend au-dessous du diaphragme (4).

4. Phare selon l'une des revendications 1 à 3, **caractérisé en ce que** la partie (7) de l'élément de support (5), qui sert d'élément d'occultation et sert à fixer le dispositif de réglage télécommandable (6), s'étend au moins jusqu'au bord du système optique formé par le réflecteur (1), le diaphragme (4) et la lentille (3), et recouvre approximativement l'ensemble de la section d'ouverture avant du réflecteur (1), qui est située au-dessous du diaphragme réglable (4).

5. Phare selon la revendication 4, **caractérisé en ce que** l'élément de support (5) est fixé des deux côtés du plan médian vertical du réflecteur (1) sur le bord avant du réflecteur (1).

6. Phare selon l'une des revendications 1 à 5, **caractérisé en ce que** le dispositif de réglage télécommandable (6) est monté au moyen d'éléments d'entretoisement (8) sur la partie (7) de l'élément de support (5).

7. Phare selon l'une des revendications 1 à 6, **caractérisé en ce que** la partie (7), qui sert d'élément d'occultation et est utilisée pour fixer le dispositif de réglage télécommandable (6), est limitée vers le haut par un diaphragme (4), qui est agencé sous la forme d'un levier à un seul bras, s'étend, dans son étendue longitudinale, au voisinage de la partie marginale supérieure (9) de l'élément de support (5) et peut pivoter autour d'un axe (10) qui s'étend dans la direction de sortie de la lumière.

8. Phare pour véhicules, dont le diaphragme réglable (4) produit, avec son bord (11), la limite zone claire / zone sombre d'une lumière dissymétrique d'éclairement de croisement et est réglable au moyen du dispositif de réglage télécommandable (6) dans la position produisant la lumière de croisement et la lumière de longue portée, et deux sections (12 et 13) du bord du diaphragme qui s'étendent à des niveaux différents et parmi lesquelles, lorsque le diaphragme (4) est dans la position de délivrance de la lumière de croisement, la section (12) du bord du diaphragme, qui s'étend au niveau plus élevé, produit la section de la limite zone claire / zone sombre pour le côté opposé de la chaussée, et la section (13) du bord du diaphragme, qui s'étend au niveau plus bas, produit la section de la limite zone claire / zone sombre pour le côté proprement dit de la chaussée, selon l'une des revendications 1 à 7, **caractérisé en ce que** le diaphragme (4), qui peut pivoter autour d'un axe (10) qui s'étend dans la direction de sortie de la lumière, est disposé à une distance du plan médian vertical au-dessous de la section (13) du bord du diaphragme (4), qui s'étend au niveau plus bas.

9. Phare selon la revendication 7 ou 8, **caractérisé en ce que** l'axe (10) traverse la partie de bord supérieure (9) de l'élément de support en forme de plaque (5).

10. Phare selon l'une de revendications 1 à 9, **caractérisé en ce que** l'élément de support (5) comporte un bord (14) de diaphragme pour la lumière de longue portée, qui, lorsque le diaphragme (4) est dans la position pour l'obtention de la lumière de longue portée, s'étend au-dessus du diaphragme (4).

11. Phare selon la revendication 10, **caractérisé en ce que** le bord (14) du diaphragme est disposé de telle sorte que deux sections (15) s'abaissent en direction de l'axe médian vertical du réflecteur (1).

12. Phare selon l'une des revendications 1 à 11, **caractérisé en ce que** le diaphragme réglable (4), l'élément de levage (39) et le support formant l'axe (10) sont situés approximativement dans une surface qui s'étend en étant contiguë à une surface principale de l'élément de support (5).

13. Phare selon la revendication 12, **caractérisé en ce que** le renfoncement (36) de l'élément de support (5) est ouvert en direction de la lentille (3) et porte, sur son côté extérieur, un appareil électronique (37) disposé au-dessous du réflecteur (1).
